# EUROPEAN PATENT SPECIFICATION

(11) **EP 3 004 250 B1**
(45) Date of publication and mention of the grant of the patent: **24.06.2020**
(21) Application number: 14706135.2
(22) Date of filing: 03.02.2014
(51) Int. Cl.: C08L 95/00

(54) **METHOD OF PREPARING A CURABLE BITUMINOUS BINDER, AND METHOD OF PREPARING A SURFACE LAYER CONTAINING THE BINDER, AND SURFACE LAYER COMPRISING THE CURED BINDER**
HÄRTBARES BITUMINÖSES BINDEMITTEL, VERFAHREN ZU SEINER HERSTELLUNG UND ZUR BILDUNG EINER OBERFLÄCHENSCHICHT MIT DEM BINDEMITTEL, UND OBERFLÄCHENSCHICHT MIT DEM GEHÄRTETEN BINDEMITTEL
LIANT BITUMINEUX DURCISSABLE, PROCÉDÉ DE PRÉPARATION ET DE FORMATION D'UNE COUCHE DE SURFACE CONTENANT LE LIANT ET COUCHE DE SURFACE COMPRENANT LE LIANT DURCI

(30) Priority: 28.05.2013 EP 13169492
(43) Date of publication of application: 13.04.2016
(73) Proprietor: Nynas AB (publ), 121 29 Stockholm (SE)
(72) Inventor: UHLBÄCK, Petri, SE-149 41 Nynäshamn (SE)
(74) Representative: Brann AB
(86) International application number: PCT/SE2014/050134
(87) International publication number: WO 2014/193287

(56) References cited:
- EP-A1- 1 717 275
- EP-A1- 2 166 039
- US-A- 2 940 942
- US-A1- 2008 216 712

## Description

### FIELD OF THE INVENTION

The present invention relates to bituminous binder compositions suitable for use and application at lower temperatures, and more particularly to a method of preparing a curable bituminous binder composition comprising a bitumen material, a saponifiable organic fatty acid, and an inorganic metal compound capable of reacting with the organic fatty acid to form a metal soap, and a method of preparing an asphalt layer on to a surface, especially a road. The invention also relates to a curable bituminous binder composition obtainable by means of the method, and a surface layer comprising a cured bituminous binder obtainable with the method.

### BACKGROUND ART

Bitumen is a sticky, black and highly viscous liquid or semi-solid that is present in most crude petroleum and in some natural deposits. Bitumen (or asphalt or asphalt cement using U.S. terminology) is the carefully refined residue from the distillation process of selected crude oils.

The primary use of bitumen is in road construction and maintenance, where it is used as the glue or binder for the aggregate particles.

In road construction and related applications, a conventional bituminous binder is normally applied at a relatively high temperature (150-160°C) when asphalt mix is produced. The high temperature is used in order to keep the viscosity low enough to secure a good asphalt mix. Also, when the asphalt mix is applied on to the road a high temperature is required for suitable low viscosity and thus for good workability of the asphalt. The high temperature of the binder is associated with some drawbacks. Firstly, a lot of energy is required to heat the mix, and, secondly, there are more emissions from the binder than at a lower temperature.

Hence, if the temperature of the asphalt mix, and thus of the binder, could be lowered during processing, associated obtainable benefits would be a lower energy consumption and also less emission from the binder. This requires however use of a binder with lower viscosity, which will cause problems with deformation of the resulting asphalt layer at service temperature. Thus, a binder with low application viscosity and high enough viscosity at service temperatures is desired.

At the same time, the binder must not exhibit a higher increase in viscosity with decreasing service temperature than conventional bitumen, which could otherwise lead to problems at low service temperatures in the form of cracking of the resulting asphalt layer.

As a conventional solution to the above problem, cutbacks, i.e. bitumen diluted with a petroleum solvent, have been used. However, cutbacks have a disadvantage in the form of emission of the solvent when drying, and therefore their use has decreased because of health and environmental aspects.

Another way to lower the applying temperature is to use a bitumen emulsion, but this approach has some limitations at humid and cold weather conditions.

Yet another approach is to use a flux to lower the viscosity of the bitumen. Fluxed bitumen retain their lower viscosity for a longer period of time than cutback bitumen since bitumen flux are based upon less volatile hydrocarbon fractions. This approach will however produce a softer asphalt, and is not suitable for roads with heavy traffic.

US 2007/0191514 teaches a process for bituminous paving which is said to have significantly lower mixing, paving, and compaction temperatures than for conventional hot mix paving (temperatures that are 30-80°F lower). The process uses a foamable lubricating solution comprising soap and water. The soap can e.g. be sodium or potassium soaps of crude or refined tall oils. Foam is typically obtained from water vapour at elevated temperature. According to US 2007/0191514, in order to obtain a heated, foamed mixture, the foamable composition, maintained at an elevated temperature, is injected into a heated asphalt binder maintained at a temperature of 180-380°F. Such systems, however, are known to exhibit poor adhesion to the aggregate, and are moreover sensitive to humid weather conditions.

US 4,874,432 teaches saponification of tall oil directly in liquefied asphalt compositions for gelling the liquefied asphalt material. The resulting gelled asphalt cement is thereafter utilized in conventional processes in road applications.

Similarly, WO 96/33244 teaches converting asphalt compositions to non-Newtonian flow characteristics using a cross-linking agent produced by the anhydrous saponification of tall oil.

Powder additives for similar purposes comprising, i.a., a saponifiable organic acid, e.g. as contained in tall oil, and an alkali metal base are also known in the art, e.g. from WO 03/097751.

The above-mentioned prior art uses alkali metal compounds, i.e. lithium, sodium and potassium compounds, especially sodium hydroxide.

EP 1 717 275 discloses a bituminous binder and a process for asphaltic coating of surfaces using the binder, wherein the process is stated to preferably be carried out at a temperature between 25°C and 130°C. The bituminous binder comprises between 50 and 94.4999% of penetrating asphaltic bitumen, between 0.5 and 49.9999% of at least one unsaturated fatty acid, and between 0.0001 and 1% of at least one fatty acid cross-linking catalyst. The cross-linking catalyst preferably comprises metallic soaps of the general formula (RCOO)ₓM, where M is a metal with valence x, selected from a specified range of metals. In the examples provided in EP 1 717 275 cobalt octoate, and cobalt naphthenate, respectively, have been used as cross-linking catalyst. In the examples of EP 1 717 275, however, curing has been carried out only at temperatures of 100°C, 130°C and 160°C, respectively, for 24 hours in the laboratory.

In practice, however, the temperature of the asphalt and binder will not remain that high for a long period of time. Hence, one can expect a significantly longer curing time in a practical application of the teachings of EP 1 717 275.

In reality, in many instances of road construction, however, e.g. in the Nordic countries, road temperature will often not exceed 20°C.

Accordingly, it would be desirable to provide a bituminous binder and method applicable at lower temperatures, while avoiding the drawbacks of the prior art set out above. At the same time, a reasonable time of hardening is desirable. Therefore, it is an object of the present invention to provide such bituminous binder and method.

### SUMMARY OF THE INVENTION

According to the present invention, the above object has been achieved by means of the method of claim 1 for preparing a curable bituminous binder composition for use in asphalt applications, comprising the steps of: A_{CB} providing a bitumen material; B_{CB} diluting the bitumen material by adding thereto a saponifiable organic fatty acid, so as to obtain a diluted bituminous material, and; C_{CB} contacting the diluted bituminous material obtained in step B_{CB} with an inorganic metal compound comprising a metal ion of the valence of at least two capable of reacting with the organic fatty acid to form a metal soap, so as to obtain a curable bituminous binder composition.

According to the invention, the fatty acid and the inorganic metal compound form a two component curable binder, which will replace a portion of the bitumen material of the bituminous binder composition.

The organic fatty acid used is preferably of non-food origin, and more preferably of renewable origin. By using a renewable organic fatty acid, fossil or petroleum derived products, as used in the prior art for fluxing the bitumen, can be avoided.

In another aspect the present invention relates to a method of preparing a cured bituminous layer on a surface, comprising the steps of: A_{CBL} providing a diluted bituminous material comprising a bitumen material to which a saponifiable organic fatty acid has been added; B_{CBL} contacting the diluted bituminous material of step A_{CBL} with an inorganic metal compound comprising a metal ion of the valence of at least two capable of reacting with the organic fatty acid to form a metal soap, to form a curable bituminous binder composition; C_{CBL} applying the curable bituminous binder composition obtained in step B_{CBL} to a desired surface, so as to form a bituminous layer on said surface; and, D_{CBL} curing the bituminous layer obtained in step C_{CBL}.

In yet an aspect the present invention relates to a method of preparing an asphalt layer on a surface, such as a road, comprising the steps of: A_{AL} providing a bituminous binder; B_{AL} providing an aggregate material; C_{AL} applying to a desired surface the bituminous binder, and the aggregate material, respectively, separately, or as a mixture thereof; D_{AL} forming on said desired surface an asphalt layer comprising the bituminous binder and the aggregate material; E_{AL} allowing the asphalt layer formed in step D_{AL} to harden, wherein the bituminous binder in step A_{AL} comprises a bitumen material diluted with a saponifiable organic fatty acid, and wherein the method further comprises a step F_{AL}, in which step the bituminous binder of step A_{AL} is contacted with an inorganic metal compound comprising a metal ion of the valence of at least two capable of reacting with the organic fatty acid to form a metal soap, to form a curable bituminous binder composition.

In one embodiment of the above method the aggregate material in step B_{AL} is provided with the inorganic metal compound on surfaces of particles thereof, which mineral aggregate material is brought into contact with the diluted bituminous material.

In yet an aspect the present invention relates to a curable bituminous binder composition, which comprises a bitumen material, a saponifiable organic C₁₂-C₂₄ fatty acid, and an inorganic metal compound comprising a metal ion of the valence of at least two, which metal ion is capable of reacting with the fatty acid to form a metal soap, which curable bituminous binder composition is obtainable by means of the inventive method.

The invention is primarily intended for use with application temperatures below 100°C. In the inventive methods of preparing a cured bituminous binder and of preparing a hardened asphalt layer, respectively, the diluted bituminous binder, and the curable bituminous binder composition, respectively, are thus preferably provided at a temperature of below 100°C.

The resulting surface layer prepared according to the invention will be essentially free from leachable (water-soluble) components, and solvent emissions.

In yet another aspect the present invention relates to an asphalt surface layer comprising a cured bituminous binder composition, which binder composition contains at least 2% by weight of a non-soluble metal soap formed from a saponifiable organic fatty acid, and an inorganic metal compound comprising a metal ion of the valence of at least two, which asphalt layer is obtainable by means of the inventive method.

The present invention is primarily intended for road applications, such as road construction and road maintenance.

The present invention also relates to the use of the inventive curable bituminous binder for preparing a hardened bituminous layer, or an asphalt layer.

Further aspects, embodiments and advantages of the invention will be apparent from the detailed description and appended claims.

The terms "fluxed" and "diluted" have been used interchangeably herein, and are both intended to denote a softening, and reduction in viscosity, of the bitumen material to improve the workability and mixing ability thereof at lower temperatures, which is accomplished with a flux, i.e. without addition of any volatile solvents.

The term "asphalt" is used herein to denote a combination of a bituminous binder and an aggregate material.

The subscript "CB" has been used to denote Curable Binder to distinguish steps relating to the inventive method of preparing a curable bituminous binder.

The subscript "CBL" has been used to denote Cured Bituminous Layer to distinguish steps relating to the inventive method of preparing a cured bituminous layer.

The subscript "AL" has been used to denote Asphalt Layer to distinguish steps relating to the inventive method of preparing a hardened asphalt layer.

### BRIEF DESCRIPTION OF THE ATTACHED DRAWINGS

Figure 1 shows the viscosity of fluxed bitumen compositions of the invention, as compared to the bitumen material used without addition of the inventive flux.
Figure 2 shows the viscosity of the cured fluxed compositions.
Figure 3 shows the viscosity of two different fluxed compositions of the invention, which are applicable at a temperature of about 30°C, and the viscosities of the cured compositions, as compared to viscosity of the standard bitumen 160/220.

### DETAILED DESCRIPTION OF THE INVENTION

According to the present invention, the organic fatty acid is used to soften, and to reduce the viscosity of the bitumen material, i.e. to flux the bitumen material, thereby improving the workability and mixing ability of the bitumen material at lower temperatures. A lower temperature is advantageous, since it corresponds to a lower energy consumption. Upon contact with the inorganic metal compound of the invention, a metal soap will be formed from the fatty acid and metal ion. Due to the valence, i.e. 2 or more, of the metal ion, the metal soap will be non-soluble in water, or only sparsely soluble in water. By formation of the metal soap the binder will be cured, and the fatty acid and metal ion will thus form a binder, replacing a portion of the bitumen material of the bituminous binder composition. According to the invention, the fatty acid and the inorganic metal compound thus form a two component curable binder.

The inventive binder formed from the fatty acid and the inorganic metal compound can also be regarded a semi-organic filler in the bituminous binder.

The inorganic metal compound can e.g. be introduced either as a powder in the aggregate material before the aggregate material is contacted with the fluxed binder composition, or, as a pumpable liquid which is injected into the fluxed bitumen binder composition before said composition is contacted with the aggregate material. In the latter case the pumpable liquid comprises the inorganic metal compound, which is preferably dispersed in a non-reactive liquid medium, e.g. an oil, in such a way that the viscosity of the liquid is adjusted for the intended application temperature.

Accordingly, in practice, the present invention will allow for different methods to be used for preparing a cured bituminous layer, such as e.g. an asphalt layer on a road. The fluxed bituminous binder composition can for example be applied as is, such as by spraying from a bitumen spreader, onto a layer of aggregate material comprising the inorganic metal compound, e.g. on the surface of the aggregate particles. Alternatively, the inorganic metal compound, for example dispersed in a non-reactive liquid medium, is mixed with the fluxed bituminous binder composition immediately before the composition is applied, e.g. by spraying, onto the aggregate. In practice, e.g. in road applications, the pumpable suspension of inorganic metal compound may be added as an additive flow into the flow of fluxed bituminous binder on the ramp of the bitumen spreader, just before application to the aggregate. The two methods may of course be combined if desired.

An additional layer may be formed upon the first layer by application thereon of an additional aggregate layer to which fluxed bituminous binder is applied. The method can be repeated until the desired thickness has been reached.

The present invention is also useful in surface treatment applications, such as e.g. on an asphalt road or an unsealed road. In such applications a layer of the inventive curable bituminous binder composition may be formed on the surface, on to which layer aggregate material is spread. Alternatively, a bituminous binder comprising a bitumen material diluted with a saponifiable organic fatty acid according to the invention, free from the metal compound, can also be used, in which case the metal compound will be comprised in the aggregate material, such as on surfaces of the particles thereof.

Further, the present invention can also be useful in cold paving technology, wherein an asphalt mix is produced and applied at ambient low temperature.

Upon contact of the fatty acid with the inorganic metal compound, the curing reaction, i.e. the saponification reaction, will start, typically within a matter of seconds up to about two minutes. The rate of the reaction will primarily be dependent upon the temperature. At a lower temperature the reaction will be slower, while at a higher temperature the reaction may proceed more or less instantaneously. Also, water formed during the saponification reaction will accelerate the reaction.

The saponification reaction of the inventive curable binder will endow the resulting bituminous composition with non-Newtonian flow characteristics. The resulting inventive bituminous binder composition comprising the two component curable binder will thus be less prone to run.

In road applications, in practice, the following day after application, the hardness of the resulting asphalt layer will have reached its maximum value, or a value very close the maximum value, which will be sufficient for letting traffic on to the road.

The above methods are especially preferred in road applications using grouted or penetration macadam.

The present invention is suitable for use in humid conditions, such as e.g. with humid aggregate material or in humid weather, e.g. rain. According to the invention, the aggregate is not required to be dried before use with the invention. This is in particular an advantage in the low temperatures of the present invention, i.e. below 100°C, as aggregate material kept at a temperature below 100°C typically will exhibit a certain degree of humidity. Accordingly, as opposed to many prior art techniques, heating of the aggregate material in order to dry same is not required according to the present invention. In the inventive method of preparing an asphalt layer the aggregate material may accordingly preferably be provided at a temperature of below 100°C. More typically, in most applications the aggregate material will be provided at ambient temperature.

The metal soap formed according to the invention will bind some water, and can thus to some extent accommodate water, such as comprised in the aggregate material, or comprised in the atmosphere. In fact, it is believed that residual humidity in the aggregate will improve the adhesion of the fluxed binder to the aggregate, due to the presence of the metal soap formed in the binder. This is in contrast to the prior art, in which humidity typically is considered to be problematic, due to an impaired adhesion of the binder to the aggregate material caused by the humidity.

Especially when the inorganic metal compound being used is dispersed in a non-reactive liquid medium, the invention will be apt for use in humid conditions. In such case there will be no water-soluble components present.

The viscosity at the desired application temperature of the binder composition, as well as the final properties of the cured binder after hardening, can be optimized by selection of bitumen material and the concentration of the fatty acid.

The present invention can be used at low application temperatures. Generally, for the purpose of the present invention, a viscosity of up to about 1 Pas of the fluxed binder is considered to be acceptable for applicability, and for blending with the inorganic metal compound. In the following, a maximum viscosity of 1 Pas of the fluxed binder will be used herein as a criterion of applicability. In Example 4, the preparation of a fluxed binder composition applicable at a temperature of about 30°C will be described. It is believed that by appropriate selection of bitumen material, organic fatty acid(s), and concentration thereof, fluxed bituminous binder compositions for application at room temperature, i.e. at about 25°C, can be prepared according to the invention.

As a general indication of the influence of the combination of fatty acid and bitumen material on the viscosity, the viscosity of some compositions using different amounts of different fatty acids are presented in the below table.

| **Fatty acid** | **% Fatty acid** | **Bitumen** | **Viscosity(Pas)** | **Temperature (°C)** |
|---|---|---|---|---|
| - | 0 | 160/220 | 77,5 | 60 |
| TOFA | 5 | 160/220 | 5 | 75 |
| TOFA | 10 | 160/220 | 7,9 | 60 |
| Oleic Acid | 10 | 160/220 | 8,3 | 60 |
| Stearic Acid | 10 | 160/220 | 8,9 | 60 |
| TOFA | 20 | 160/220 | 6 | 45 |
| - | 0 | 50/70 | 72,5 | 75 |
| TOFA | 10 | 50/70 | 6 | 75 |
| - | 0 | MB9000 | 9,9 | 60 |
| Oleic Acid | 20 | MB9000 | 6 | 30 |

### The inorganic metal compound

The metal ion of the inorganic metal compound must have a valence of at least 2+. A valence of at least 2+ will make the reaction product, i.e. the soap, hydrophobic, i.e. water insoluble. Soaps of metal cations of a valence of 1+, on the other hand, such as alkali metal soaps, e.g. sodium soap as used in the prior art, are hydrophilic, thus making the resulting soap an emulsifier. Hence they are not usable in the present invention.

Examples of metal ions which can be used according to the invention as a cation donator for the saponification reaction are Ca²⁺, Mg²⁺, Zn²⁺, Al³⁺, Fe²⁺, Fe³⁺, Co²⁺, Cu²⁺, Ba²⁺, Sr²⁺, Mn²⁺, and Ni²⁺. Some specific examples of suitable inorganic metal compounds are magnesium hydroxide, hydrated lime, barium hydroxide, active aluminium hydroxide, and zinc oxide. Also, compatible compositions containing the inorganic metal compound, such as Portland cement, which contains Ca²⁺, can be used. In such case, the inactive bulk of the amount of composition used will function as a filler material in the resulting bitumen binder. Preferably, an environmentally safe inorganic metal compound, or an inorganic metal compound not associated with any environmental concerns is selected.

The metal ion of the inorganic metal compound of the invention preferably has a valence of 2+ or 3+.

Inorganic metal compounds which could also function as crosslinking agents for any unsaturated fatty acid present in the fluxed bituminous binder composition, should preferably be avoided when an unsaturated fatty acid is being used, so as to not disturb the intended curing mechanism of the invention. Such compounds will be known to the skilled person from the varnish and paint industry as driers, siccatives, or cross-linking catalysts. Such compounds are typically metal C₇-C₁₁ carboxylates, wherein the metal typically is Co or Mn, but also Zn, Ca or Ba, especially metal C₈ carboxylates, such as e.g. cobalt octoate.

Examples of preferred metal ions of the invention are Ca²⁺, Zn²⁺, Al³⁺, Fe²⁺, and Fe³⁺. The inorganic metal compound is preferably a hydroxide or an oxide. Especially preferred is Ca(OH)₂. Another preferred compound is ZnO.

The inorganic metal compound is used in an amount so as to provide at least a stoichiometric amount of metal ions corresponding to the average acid number of the acids used. Preferably, in order to secure a good curing, the system is overbased, more preferably to such extent that a stoichiometric excess of about 50% of metal ions is present as compared to the average acid number of the fatty acids used.

A bituminous binder composition comprising 2% of weight of TOFA having a saponification value of 198 mg KOH/g will e.g. require an addition of 0.26 % by weight of Ca(OH)₂ for stoichiometric neutralisation of the TOFA, and 0.39 % by weight for obtaining an overbased system having a 50 % stoichiometric excess.

When used in the form of a dispersion, the inorganic metal compound is dispersed in a non-reactive liquid medium, so as to form a pumpable liquid. As a non-reactive liquid medium any liquid medium which is compatible with the bituminous binder can be used, such as an oil, e.g. a mineral oil. The viscosity of the liquid medium is adjusted for the selected application temperature. Conventional additives can be used to stabilise the dispersion.

### The organic saponifiable fatty acid

As a flux any saponifiable organic fatty acid which will lower the viscosity of the binder at the intended application temperature can be used according to the invention, as long as the fatty acid is not water-soluble and does not form a liquid metal soap with the metal ion of the inorganic metal compound. Both solid and liquid fatty acids can be used. At the same time, when used, a solid fatty acid must be selected so as to be able to flux the bitumen at the desired application temperature. Solid fatty acids requiring a high extent of heating of the fatty acid and bitumen for fluxing the bitumen, i.e. fatty acids having a high melting point, are less preferred.

The fatty acid(s) used may be unsaturated (typically mono, double or triple unsaturated) and/or saturated. This is in contrast to EP 1717 275 which relies on the use of an unsaturated fatty acid. As regards the fatty acid used, the present invention relies on the acid functionality of the fatty acid for reaction with the metal ion to form a metal soap.

The rheological properties of the resulting fluxed bitumen can obviously to some extent be varied depending on the choice of the fatty acid and amount thereof.

The saponifiable fatty acid is used in an amount sufficient to reduce the viscosity of the bitumen material for the desired application temperature. The amount of the fatty acid(s) used should be selected sufficiently low in order not to compromise the desired mechanical properties of the bitumen material used. A harder bitumen grade will typically require a larger amount of fatty acid for fluxing. A suitable amount of fatty acid is therefore considered to be within the range of from 2% to 30% by weight of the resulting fluxed binder, typically from 5% to 30%, preferably from 5% to 20%, and, especially from 5 to 15% by weight.

The saponifiable fatty acid is preferably selected from C₁₂-C₂₄ fatty acids. The fatty acids are preferably mono-functional. Preferred fatty acids are naturally occurring fatty acids, such as obtained from naturally occurring fats and oils. Examples of suitable fatty acids are single substances as linolic, linoleic, oleic, and stearic acids, or mixtures like tall oil fatty acid (TOFA), rape seed oil fatty acids, lanoline fatty acid, or linseed oil fatty acids. Preferably a fatty acid not being connected to the food supply chain is used, such as e.g. TOFA. A more preferred range of fatty acids for use in the present invention is C₁₆-C₂₀ fatty acids.

The temperature used when fluxing the bitumen material will be dependent on the specific bitumen and the fatty acid selected. A fatty acid solid at room temperature, such as stearic acid, will require heating to the melting point for fluxing, while a fatty acid which is liquid at room temperature can be used for fluxing at room temperature, depending on the specific bitumen material, which may require heating for proper fluxing. The skilled person can easily establish a proper fluxing temperature.

### Bitumen material

As the bitumen material distilled bitumen, soft bitumen, road oil, blown (oxidized) bitumen, propane de-asphalted bitumen, polymer modified bitumen, and the like can be used. The selection of the bitumen component depends on the purpose of the application in which the binder will be used. Typically, the bitumen material used in the invention has a softening point up to 70°C, e.g. within the interval of 30°C-70°C. A bitumen material having a softening point according to method EN 1427 within the interval of 35°C-50°C is generally being preferred. The penetration of the bitumen material at 25°C according to method EN 1426 is typically above 10 mm/10, a generally preferred penetration being above being 20 mm/10.

### Aggregate material

The present invention can be used with any conventionally used aggregate material, e.g. granite, vulcanite or porphyry.

### Application

The present invention can be used in any application, however preferably for grouted or penetration macadam and surface dressing.

Conventional means for forming the asphalt layer, including compaction and the like, can be used with the invention.

The invention will now be described in closer detail by way of the following non-limiting Examples.

### EXAMPLES

In the Examples calcium hydroxide was used in the form of a dispersion in mineral oil. The dispersion was prepared using a High Shear Mixer. One third of weight of fine calcium hydroxide powder was dispersed in a mineral oil mix at room temperature.

The amount of calcium hydroxide used for the inventive saponification reaction has been calculated based upon the acid number of the respective fatty acid, with an additional excess amount corresponding to 50% overbase, as a security margin.

In the Examples the viscosities were measured at different temperatures using a Dynamic Shear Rheometer.

The fatty acids used in the Examples all have similar acid numbers, and, for simplicity, an acid number of 200 mg KOH/g acid has been employed for all fatty acids used in the Examples. Accordingly, 0.2 kg Ca(OH)₂ per kg acid has been used throughout the Examples, thereby providing systems overbased by 50%.

### EXAMPLE 1

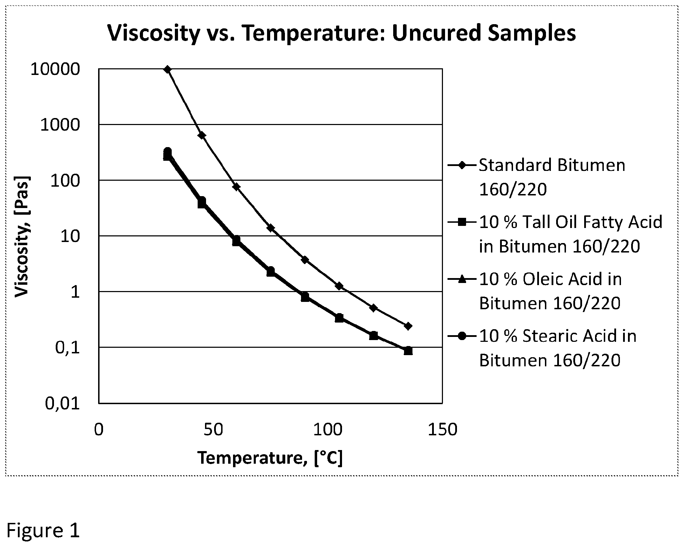

0.9 kg of standard bitumen 160/220 with a Softening Point of 38 °C according to method EN 1427, and a Penetration of 176 /10 mm according to method EN 1426 was fluxed at a temperature of 140°C with 10% by weight of tall oil fatty acid (TOFA), based upon the weight of the resulting fluxed bitumen blend. The viscosity of the fluxed bitumen was then measured at different temperatures as shown in Fig 1. The viscosity of the bitumen used is also set forth in Fig 1 for comparison.

The fluxed blend was thereafter mixed with 60 g of the calcium hydroxide dispersion using a laboratory stirrer at 95°C, providing a total of 20 g calcium hydroxide.

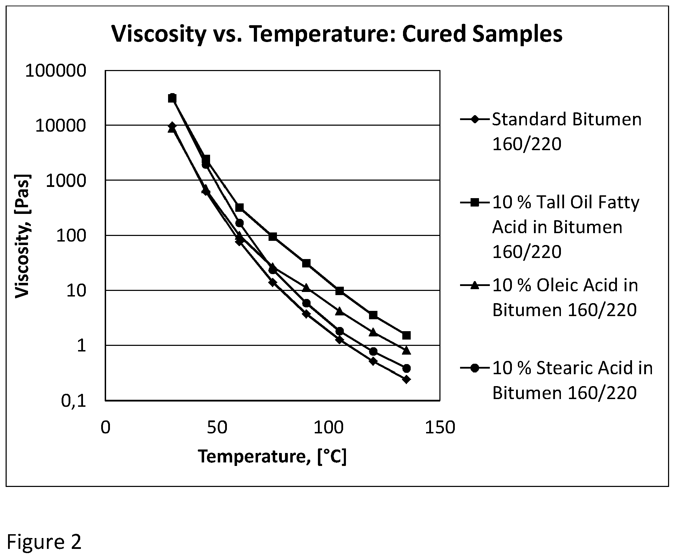

The viscosity of the cured blend was then measured 30 minutes after mixing with the calcium hydroxide. The viscosity as a function of the temperature of the cured blend is set forth in Figure 2, along with the viscosity of the standard bitumen 160/220 for comparison.

### EXAMPLE 2

0.9 kg of the standard bitumen 160/220 used in Example 1 was fluxed at a temperature of 140°C with 10% by weight of oleic acid, based upon the weight of the resulting fluxed bitumen blend. The viscosity of the fluxed bitumen was then measured at different temperatures as shown in Fig 1. The viscosity of the bitumen used is also set forth in Fig 1 for comparison.

The fluxed blend was thereafter mixed with 60 g of the calcium hydroxide dispersion using a laboratory stirrer at 95°C, providing a total of 20 g calcium hydroxide.

The viscosity of the cured blend was then measured 30 minutes after mixing with the calcium hydroxide. The viscosity as a function of the temperature of the cured blend is set forth in Figure 2, along with the viscosity of the standard bitumen 160/220 for comparison.

### EXAMPLE 3

0.9 kg of the standard bitumen 160/220 used in Example 1 was fluxed at a temperature of 140°C with 10% by weight of stearic acid, based upon the weight of the resulting fluxed bitumen blend. The viscosity of the fluxed bitumen was then measured at different temperatures as shown in Fig 1. The viscosity of the bitumen used is also set forth in Fig 1 for comparison.

The fluxed blend was thereafter mixed with 60 g of the calcium hydroxide dispersion using a laboratory stirrer at 95°C, providing a total of 20 g calcium hydroxide.

The viscosity of the cured blend was then measured 30 minutes after mixing with the calcium hydroxide. The viscosity as a function of the temperature of the cured blend is set forth in Figure 2, along with the viscosity of the standard bitumen 160/220 for comparison.

As can be seen from Figure 1, 10% of the fatty acid as used in the examples 1-3 is enough to markedly reduce the viscosity of the bitumen binder, thereby making the inventive binder applicable at temperatures below 100°C. Surprisingly, the identity of the specific fatty acid used seems not to have any discernible influence on the viscosity of the fluxed bitumen.

As can be seen from Figure 2, the viscosity of the cured samples is higher or much higher than the viscosity of the Standard Bitumen 160/220 after curing. Here the different fatty acids also show different results, which can be expected, because of their different molecular shape.

In Examples 1-3 above a fluxing temperature of 140°C, as conventionally used in practice, was employed. The fluxing temperature is not critical to the invention as long as an adequate mixing of the bitumen and fatty acid can be obtained, and is selected based upon the viscosity of the bitumen component and fatty acid(s) used.

### EXAMPLE 4

In this example two different fluxed bitumen compositions applicable at a temperature of about 30°C (using a maximum viscosity of 1 Pas as a criterion for applicability) are prepared.

### First Composition

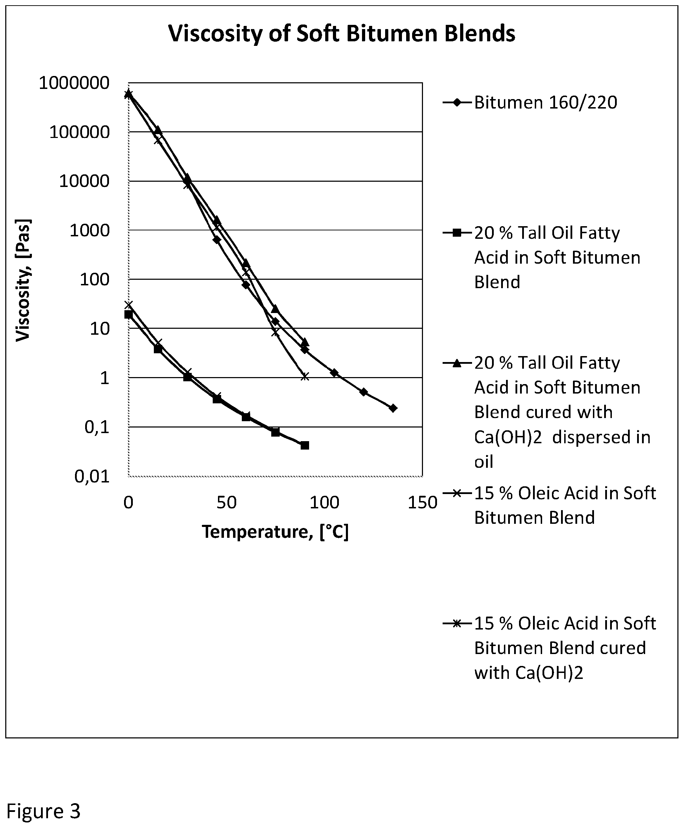

0.85 kg of soft bitumen blend made in laboratory V 600 (Viscosity 600 Pas at 60°C) was fluxed at a temperature of 90°C with 15 % by weight of oleic acid. The viscosity of the blend was then measured at different temperatures as shown in Fig 3. The viscosity of the bitumen used is also set forth in Fig 3 for comparison.

The blend was thereafter mixed with 30 g of calcium hydroxide powder at room temperature using a laboratory stirrer.

Because of the low temperature and thus a longer reaction time the viscosity of the cured blend was measured after one day as shown in Figure 3.

### Second Composition

0.8 kg of soft bitumen blend made in laboratory V 900 (Viscosity 900 Pas at 60°C) was fluxed at a temperature of 90°C with 20 % by weight of TOFA. The viscosity of the fluxed blend was then measured at different temperatures as shown in Fig 3. The viscosity of the bitumen used is also set forth in Fig 3 for comparison.

The fluxed blend was thereafter mixed with 120 g of the calcium hydroxide dispersion at room temperature using a laboratory stirrer, providing a total of 40 g calcium hydroxide.

The viscosity of the cured blend was then measured after one day as shown in Figure 3.

The viscosity of the resulting cured composition can be controlled by the selection of the fatty acid, the concentration thereof, and the bitumen component.

## Claims

1. A method of preparing a curable bituminous binder composition for use in asphalt applications, comprising the steps of:
A_{CB} providing a bitumen material;
B_{CB} diluting the bitumen material by adding thereto a saponifiable organic fatty acid, so as to obtain a diluted bituminous material; and
C_{CB} contacting the diluted bituminous material obtained in step B_{CB} with an inorganic metal compound comprising a metal ion of the valence of at least two capable of reacting with the organic fatty acid to form a metal soap, so as to obtain a curable bituminous binder composition.

2. The method of claim 1, wherein the bitumen material exhibits a softening point of up to 70°C according to method EN 1427.

3. The method of claim 1 or 2, wherein the bitumen material exhibits a penetration above 10 mm/10 according to method EN 1426.

4. The method of any one of the previous claims, wherein step C_{CB} is accomplished by mixing the diluted bituminous material obtained in step B_{CB} with a suspension of said inorganic metal compound in a non-reactive liquid medium.

5. The method of any one of claims 1-3, wherein step C_{CB} is accomplished by contacting the diluted bituminous material obtained in step B_{CB} with a mineral aggregate material provided with, on surfaces thereof, said inorganic metal compound.

6. A method of preparing a cured bituminous layer on a surface, comprising the steps of:
A_{CBL} providing a diluted bituminous material comprising a bitumen material to which a saponifiable organic fatty acid has been added;
B_{CBL} contacting the diluted bituminous material of step A_{CBL} with an inorganic metal compound comprising a metal ion of the valence of at least two capable of reacting with the organic fatty acid to form a metal soap, to form a curable bituminous binder composition;
C_{CBL} applying the curable bituminous binder composition obtained in step B_{CBL} to a desired surface, so as to form a bituminous layer on said surface; and,
D_{CBL} curing the bituminous layer obtained in step C_{CBL}.

7. A method of preparing a hardened asphalt layer on a surface, comprising the steps of:
A_{AL} providing a bituminous binder;
B_{AL} providing an aggregate material;
C_{AL} applying the bituminous binder, and the aggregate material, respectively, separately, or as a mixture thereof, to a desired surface;
D_{AL} forming on said desired surface an asphalt layer comprising the bituminous binder and the aggregate material;
E_{AL} allowing the asphalt layer formed in step D_{AL} to harden,
**characterized in that**
the bituminous binder in step A_{AL} comprises a bitumen material diluted with a saponifiable organic fatty acid, and in further comprising a step F_{AL}, in which step the bituminous binder of step A_{AL} is contacted with an inorganic metal compound comprising a metal ion of the valence of at least two capable of reacting with the organic fatty acid to form a metal soap, to form a curable bituminous binder composition.

8. The method of claim 7, wherein in step C_{AL} the curable bituminous binder composition obtained in step F_{AL} is applied to the surface.

9. The method of claim 7 or 8, wherein the contacting of the bituminous binder of step A_{AL} with the inorganic metal compound in step F_{AL} is accomplished by mixing the bituminous binder with the inorganic metal compound, preferably by mixing the bituminous binder with a suspension of the inorganic metal compound in a non-reactive liquid medium.

10. The method of any one of claims 7-9, wherein the curable bituminous binder composition obtained in step F_{AL} is mixed with the aggregate material to obtain a mix comprising the curable bituminous binder and aggregate, which mix is thereafter, in step C_{AL} applied to the surface.

11. The method of claim 7, wherein the bituminous binder and aggregate material are applied separately in step C_{AL}, and wherein the aggregate material of step B_{AL} is provided on surfaces of particles thereof with the inorganic metal compound, and step F_{AL} is accomplished by contacting, in step C_{AL}, the bituminous binder of step A_{AL} with said aggregate material.

12. The method of claim 11, wherein step F_{AL} is accomplished by applying the bituminous binder to the surface, on which surface the aggregate material is already provided.

13. A curable bituminous binder composition comprising a bitumen material, a saponifiable organic C₁₂-C₂₄ fatty acid, and an inorganic metal compound comprising a metal ion of the valence of at least two which metal ion is capable of reacting with the organic fatty acid to form a metal soap, obtainable by means of the method of claim 1.

14. The curable bituminous binder composition of claim 13, wherein the saponifiable organic fatty acid is present in an amount of 2% to 30% by weight of the resulting fluxed binder.

15. The curable bituminous binder composition of claim 13 or 14, wherein the inorganic metal compound is present in an amount providing at least a stoichiometric amount of the metal ion as compared to the amount of the fatty acid present.

16. An asphalt surface layer comprising a cured bituminous binder composition, which binder composition contains at least 2% by weight of a non-soluble metal soap formed from a saponifiable organic fatty acid, and an inorganic metal compound comprising a metal ion of the valence of at least two, obtainable by means of the method of claim 7.

## Patentansprüche

1. Ein Verfahren zur Herstellung einer härtbaren bituminösen Bindemittelzusammensetzung zum Einsatz von Asphaltanwendungen, umfassend die Schritte:
A_{CB} Bereitstellen eines Bitumenmaterials;
B_{CB} Verdünnen des Bitumenmaterials durch Zugeben einer verseifbaren organischen Fettsäure, um ein verdünntes bituminöses Material zu erhalten; und
C_{CB} Inkontaktbringen des in Schritt B_{CB} erhaltenen verdünnten bituminösen Materials mit einer anorganischen Metallverbindung, umfassend ein Metallion mit der Valenz von mindestens zwei, die mit der organischen Fettsäure unter Bildung einer Metallseife reagieren können, um eine härtbare bituminöse Bindemittelzusammensetzung zu erhalten.

2. Das Verfahren nach Anspruch 1, wobei das Bitumenmaterial einen Erweichungspunkt von bis zu 70°C, gemäß dem Verfahren EN 1427, aufweist.

3. Das Verfahren nach Anspruch 1 oder 2, wobei das Bitumenmaterial eine Penetration von über 10 mm/10, gemäß dem Verfahren EN 1426, aufweist.

4. Das Verfahren nach einem der vorhergehenden Ansprüche, wobei Schritt C_{CB} durch Mischen des in Schritt B_{CB} erhaltenen verdünnten bituminösen Materials mit einer Suspension der anorganischen Metallverbindung in einem nicht-reaktiven flüssigen Medium durchgeführt wird.

5. Das Verfahren nach einem der Ansprüche 1-3, wobei Schritt C_{CB} durch Inkontaktbringen des in Schritt B_{CB} erhaltenen verdünnten bituminösen Materials mit einem mineralischen Aggregatmaterial, das auf Oberflächen davon mit der anorganischen Metallverbindung versehen ist, durchgeführt wird.

6. Ein Verfahren zur Herstellung einer gehärteten bituminösen Schicht auf einer Oberfläche, umfassend die Schritte:
A_{CBL} Bereitstellen eines verdünnten bituminösen Materials, umfassend ein Bitumenmaterial, zu dem eine verseifbare organische Fettsäure zugegeben wurde;
B_{CBL} Inkontaktbringen des verdünnten bituminösen Materials von Schritt A_{CBL} mit einer anorganischen Metallverbindung, umfassend ein Metallion mit der Valenz von mindestens zwei, die mit der organischen Fettsäure zur Bildung einer Metallseife reagieren kann, um eine härtbare bituminöse Bindemittelzusammensetzung zu bilden;
C_{CBL} Aufbringen der in Schritt B_{CBL} erhaltenen härtbaren bituminösen Bindemittelzusammensetzung auf eine gewünschte Oberfläche, um eine bituminöse Schicht auf der Oberfläche zu bilden; und,
D_{CBL} Härten der in Schritt C_{CBL} erhaltenen bituminösen Schicht.

7. Ein Verfahren zur Herstellung einer gehärteten Asphaltschicht auf einer Oberfläche, umfassend die Schritte:
A_{AL} Bereitstellen eines bituminösen Bindemittels;
B_{AL} Bereitstellen eines Aggregatmaterials;
C_{AL} Aufbringen des bituminösen Bindemittels bzw. des Aggregatmaterials, getrennt oder als ein Gemisch davon, auf eine gewünschte Oberfläche;
D_{AL} Bilden einer Asphaltschicht, umfassend das bituminöse Bindemittel und das Aggregatmaterial, auf der gewünschten Oberfläche;
E_{AL} Härtenlassen der in Schritt D_{AL} erhaltenen Asphaltschicht,
**dadurch gekennzeichnet, dass**
das bituminöse Bindemittel in Schritt A_{AL} ein Bitumenmaterial umfasst, das mit einer verseifbaren organischen Fettsäure verdünnt ist, und dass es ferner einen Schritt F_{AL} umfasst, wobei in diesem Schritt das bituminöse Bindemittel von Schritt A_{AL} mit einer anorganischen Metallverbindung, die ein Metallion mit der Valenz von mindestens zwei, die mit der organischen Fettsäure zur Bildung einer Metallseife reagieren kann, umfasst, in Kontakt gebracht wird, um eine härtbare bituminöse Bindemittelzusammensetzung zu bilden.

8. Das Verfahren nach Anspruch 7, wobei in Schritt C_{AL} die in Schritt F_{AL} erhaltene härtbare bituminöse Bindemittelzusammensetzung auf die Oberfläche aufgebracht wird.

9. Das Verfahren nach Anspruch 7 oder 8, wobei das Inkontaktbringen des bituminösen Bindemittels von Schritt A_{AL} mit der anorganischen Metallverbindung in Schritt F_{AL} durch Mischen des bituminösen Bindemittels mit der anorganischen Metallverbindung, vorzugsweise durch Mischen des bituminösen Bindemittels mit einer Suspension der anorganischen Metallverbindung in einem nicht-reaktiven flüssigen Medium, durchgeführt wird.

10. Das Verfahren nach einem der Ansprüche 7-9, wobei die in Schritt F_{AL} erhaltenen härtbare bituminöse Bindemittelzusammensetzung mit dem Aggregatmaterial gemischt wird, um ein Gemisch zu erhalten, das das härtbare bituminöse Bindemittel und das Aggregat umfasst, wobei das Gemisch danach in Schritt C_{AL} auf die Oberfläche aufgebracht wird.

11. Das Verfahren nach Anspruch 7, wobei das bituminöse Bindemittel und Aggregatmaterial in Schritt C_{AL} getrennt aufgebracht werden und wobei das Aggregatmaterial von Schritt B_{AL} auf Oberflächen von Teilchen davon mit der anorganischen Metallverbindung versehen ist, und Schritt F_{AL} durch Inkontaktbringen in Schritt C_{AL} des bituminösen Bindemittels von Schritt A_{AL} mit dem Aggregatmaterial durchgeführt wird.

12. Das Verfahren nach Anspruch 11, wobei Schritt F_{AL} durch Aufbringen des bituminösen Bindemittels auf die Oberfläche, auf der das Aggregatmaterial bereits bereitgestellt ist, durchgeführt wird.

13. Eine härtbare bituminöse Bindemittelzusammensetzung, umfassend ein Bitumenmaterial, eine verseifbare organische C₁₂-C₁₄-Fettsäure, und eine anorganische Metallverbindung, umfassend ein Metallion mit der Valenz von mindestens zwei, wobei das Metallion mit der organischen Fettsäure zur Bildung einer Metallseife reagieren kann, die durch das Verfahren nach Anspruch 1 erhältlich ist.

14. Die härtbare bituminöse Bindemittelzusammensetzung nach Anspruch 13, wobei die verseifbare organische Fettsäure in einer Menge von 2 bis 30 Gew.-% des resultierenden gefluxten Bindemittels vorliegt.

15. Die härtbare bituminöse Bindemittelzusammensetzung nach Anspruch 13 oder 14, wobei die anorganische Metallverbindung in einer Menge vorliegt, die mindestens eine stöchiometrische Menge des Metallions verglichen mit der vorhandenen Menge der Fettsäure bereitstellt.

16. Eine Asphaltoberflächenschicht, umfassend eine härtbare bituminöse Bindemittelzusammensetzung, wobei die Bindemittelzusammensetzung mindestens 2 Gew.-% einer nicht-löslichen Metallseife, gebildet aus einer verseifbaren organischen Fettsäure und einer anorganischen Metallverbindung, umfassend ein Metallion mit einer Valenz von mindestens zwei, enthält, erhältlich durch das Verfahren nach Anspruch 7.

## Revendications

1. Procédé de préparation d'une composition de liant bitumineux durcissable pour une utilisation dans des applications d'asphalte, comprenant les étapes suivantes :
A_{CB} la fourniture d'un matériau bitumineux ;
B_{CB} la dilution du matériau bitumineux en y ajoutant un acide gras organique saponifiable, afin d'obtenir un matériau bitumineux dilué ; et
C_{CB} la mise en contact du matériau bitumineux dilué obtenu dans l'étape B_{CB} avec un composé de métal inorganique comprenant un ion métallique de la valence d'au moins deux capable de réagir avec l'acide gras organique pour former un savon métallique, afin d'obtenir une composition de liant bitumineux durcissable.

2. Procédé selon la revendication 1, dans lequel le matériau bitumineux présente un point de ramollissement allant jusqu'à 70 °C selon le procédé EN 1427.

3. Procédé selon la revendication 1 ou 2, dans lequel le matériau bitumineux présente une pénétration supérieure à 10 mm/10 selon le procédé EN 1426.

4. Procédé selon l'une quelconque des revendications précédentes, dans lequel l'étape C_{CB} est accomplie par le mélange du matériau bitumineux dilué obtenu dans l'étape B_{CB} avec une suspension dudit composé de métal inorganique dans un milieu liquide non réactif.

5. Procédé selon l'une quelconque des revendications 1 à 3, dans lequel l'étape C_{CB} est accomplie par la mise en contact du matériau bitumineux dilué obtenu dans l'étape B_{CB} avec un matériau d'agrégat minéral pourvu, sur des surfaces de celui-ci, dudit composé de métal inorganique.

6. Procédé de préparation d'une couche bitumineuse durcie sur une surface, comprenant les étapes suivantes :
A_{CBL} la fourniture d'un matériau bitumineux dilué comprenant un matériau bitumineux auquel un acide gras organique saponifiable a été ajouté ;
B_{CBL} la mise en contact du matériau bitumineux dilué de l'étape A_{CBL} avec un composé de métal inorganique comprenant un ion métallique de la valence d'au moins deux capable de réagir avec l'acide gras organique pour former un savon métallique, pour former une composition de liant bitumineux durcissable ;
C_{CBL} l'application de la composition de liant bitumineux durcissable obtenue dans l'étape B_{CBL} sur une surface souhaitée, afin de former une couche bitumineuse sur ladite surface ; et,
D_{CBL} le durcissement de la couche bitumineuse obtenue dans l'étape C_{CBL}.

7. Procédé de préparation d'une couche d'asphalte durcie sur une surface, comprenant les étapes suivantes :
A_{AL} la fourniture d'un liant bitumineux ;
B_{AL} la fourniture d'un matériau d'agrégat ;
C_{AL} l'application du liant bitumineux, et du matériau d'agrégat, respectivement, séparément, ou sous la forme d'un mélange de ceux-ci, sur une surface souhaitée ;
D_{AL} la formation sur ladite surface souhaitée d'une couche d'asphalte comprenant le liant bitumineux et le matériau d'agrégat ;
E_{AL} le fait de permettre à la couche d'asphalte formée dans l'étape D_{AL} de durcir,
**caractérisé en ce que**
le liant bitumineux dans l'étape A_{AL} comprend un matériau bitumineux dilué avec un acide gras organique saponifiable, et comprenant en outre une étape F_{AL}, dans laquelle étape le liant bitumineux de l'étape A_{AL} est mis en contact avec un composé de métal inorganique comprenant un ion métallique de la valence d'au moins deux capable de réagir avec l'acide gras organique pour former un savon métallique, pour former une composition de liant bitumineux durcissable.

8. Procédé selon la revendication 7, dans lequel dans l'étape C_{AL} la composition de liant bitumineux durcissable obtenue dans l'étape F_{AL} est appliquée sur la surface.

9. Procédé selon la revendication 7 ou 8, dans lequel la mise en contact du liant bitumineux de l'étape A_{AL} avec le composé de métal inorganique dans l'étape F_{AL} est accomplie par le mélange du liant bitumineux avec le composé de métal inorganique, de préférence par le mélange du liant bitumineux avec une suspension du composé de métal inorganique dans un milieu liquide non réactif

10. Procédé selon l'une quelconque des revendications 7 à 9, dans lequel la composition de liant bitumineux durcissable obtenue dans l'étape F_{AL} est mélangée avec le matériau d'agrégat pour obtenir un mélange comprenant le liant bitumineux durcissable et un agrégat, lequel mélange est par la suite, dans l'étape C_{AL} appliqué sur la surface.

11. Procédé selon la revendication 7, dans lequel le liant bitumineux et le matériau d'agrégat sont appliqués séparément dans l'étape C_{AL}, et dans lequel le matériau d'agrégat de l'étape B_{AL} est pourvu sur des surfaces de particules de celui-ci du composé de métal inorganique, et l'étape F_{AL} est accomplie par la mise en contact, dans l'étape C_{AL}, du liant bitumineux de l'étape A_{AL} avec ledit matériau d'agrégat.

12. Procédé selon la revendication 11, dans lequel l'étape F_{AL} est accomplie par l'application du liant bitumineux sur la surface, sur laquelle surface le matériau agrégat est déjà fourni.

13. Composition de liant bitumineux durcissable comprenant un matériau bitumineux, un acide gras organique en C₁₂ à C₂₄ saponifiable, et un composé de métal inorganique comprenant un ion métallique de la valence d'au moins deux lequel ion métallique est capable de réagir avec l'acide gras organique pour former un savon métallique, pouvant être obtenue au moyen du procédé selon la revendication 1.

14. Composition de liant bitumineux durcissable selon la revendication 13, dans laquelle l'acide gras organique saponifiable est présent en une quantité de 2 % à 30 % en poids du liant fluxé résultant.

15. Composition de liant bitumineux durcissable selon la revendication 13 ou 14, dans laquelle le composé de métal inorganique est présent en une quantité fournissant au moins une quantité stœchiométrique de l'ion métallique par rapport à la quantité de l'acide gras présent.

16. Couche de surface d'asphalte comprenant une composition de liant bitumineux durcie, laquelle composition de liant contient au moins 2 % en poids d'un savon métallique non soluble formé à partir d'un acide gras organique saponifiable, et un composé de métal inorganique comprenant un ion métallique de la valence d'au moins deux, pouvant être obtenue au moyen du procédé selon la revendication 7.
